# EUROPÄISCHE PATENTSCHRIFT

(11) **EP 1 412 218 B1**
(45) Veröffentlichungstag und Bekanntmachung des Hinweises auf die Patenterteilung: **13.02.2008**
(21) Anmeldenummer: 02753019.5
(22) Anmeldetag: 17.07.2002
(51) Int. Cl.: B60L 11/18, B60L 11/00, H02M 5/458

(54) **HYBRIDANTRIEBSSYSTEM UND VERFAHREN ZUR REGELUNG DES HYBRIDANTRIEBSSYSTEMS**
HYBRID DRIVE SYSTEM AND METHOD FOR ADJUSTING A HYBRID DRIVE SYSTEM
SYSTEME MOTEUR HYBRIDE ET PROCEDE DE REGULATION DE CE SYSTEME MOTEUR HYBRIDE

(30) Priorität: 02.08.2001 DE 10137908
(43) Veröffentlichungstag der Anmeldung: 28.04.2004
(73) Patentinhaber: SIEMENS AKTIENGESELLSCHAFT, 80333 München (DE)
(72) Erfinder: HOLL, Eugen, 90579 Langenzenn (DE); RUPPERT, Swen, 91096 Möhrendorf (DE)
(86) Internationale Anmeldenummer: PCT/DE2002/002608
(87) Internationale Veröffentlichungsnummer: WO 2003/016088

(56) Entgegenhaltungen:
- DE-A- 4 416 679
- US-A- 5 710 699
- US-A- 5 847 520
- US-A- 5 905 360

## Beschreibung

Die Erfindung betrifft auch ein Verfahren nach Anspruch 1 zur Regelung eines Hybridantriebssystems.

Ein als solches bekanntes Hybridantriebssystem wird sowohl für Straßenfahrzeuge, z.B. PKWs und Busse, als auch für Schienenfahrzeuge eingesetzt. Es zeichnet sich dadurch aus, dass ein Verbrennungsmotor mit Generator, z.B. ein Dieselmotor mit Generator, und ein Elektromotor vorhanden sind. Der Verbrennungsmotor steht über den Generator und einen Zwischenkreis mit dem Elektromotor in Verbindung. Dem Zwischenkreis ist als Energiespeicher eine Batterie oder ein Kondensator zugeordnet. Ein Kondensator hat gegenüber einer Batterie eine höhere Leistungsdichte ,eine höhere Lebensdauer und ist darüber hinaus wartungsfrei. Um eine ausreichend große Energiemenge speichern zu können, werden spezielle Kondensatoren, sogenannte Ultra-Kondensatoren, eingesetzt. Ein solches system ist aus dem Dokument US-A-5,710,699 bekannt.

Beim Fahrzeug unterscheidet man den Stillstandsbetrieb, den Anfahrbetrieb, den Fahrbetrieb und den Bremsbetrieb. Im Stillstandsbetrieb und beim Anfahren wird Energie aus dem Energiespeicher entnommen. Bei Stadtbussen erfolgt das Anfahren vorteilhafterweise ausschließlich elektrisch, damit die im Energiespeicher gespeicherte Energie effizient genutzt wird und, z.b. an einer Haltestelle, keine Abgase abgegeben werden. Während des Fahrbetriebes wird der Energiespeicher weder weiter entladen noch aufgeladen. Erst beim Bremsbetrieb soll die kinetische Energie des Fahrzeugs im Energiespeicher gespeichert werden.

Bedingt durch eine relativ kleine Energiedichte sinkt bei einem Kondensator die Spannung relativ schnell mit der Entladung. Betreibt man den Kondensator direkt am Zwischenkreis des Antriebssystemes, so wirkt sich die dann auch niedrige Zwischenkreisspannung nachteilig auf die Performance des Antriebssystemes aus, d.h. die Antriebskomponenten müssen mit niedriger Spannung betrieben werden.

Es ist bekannt, diesem Nachteil der niedrigen Spannung entgegenzuwirken, indem ein hoher Stromfluss erzeugt wird, was nur durch überdimensionierte Bauteile möglich ist. Es ist auch schon bekannt, den Kondensator über einen Wandler, beispielsweise über einen Hochtiefsetzsteller an den Zwischenkreis anzuschließen. Dieser Wandler beinhaltet jedoch eine aufwendige und teure Elektronik und verursacht darüber hinaus ein nicht vernachlässigbares Mehrgewicht.

Sowohl die Überdimensionierung der Bauteile als auch der Wandler führen zu einem höheren Gewicht und zu höheren Kosten.

Der Erfindung liegt die Aufgabe zugrunde, ein Verfahren zur Regelung eines Hybridantriebssystems anzugeben, die weder eine Überdimensionierung von Bauteilen, noch zusätzliche, teure elektronische Komponenten erfordern.

Der Energiespeicher ist z.B. ein Ultra-Kondensator, der bei hohem Speichervermögen ein geringes Gewicht hat.

Die Aufgabe, ein geeignetes Verfahren zur Regelung des Hybridantriebes anzugeben, wird gemäß der Erfindung dadurch gelöst, dass zum Entladen des Energiespeichers der Transistor sperrend geschaltet ist und die Diode durchlässig ist, dass zum Abtrennen des Energiespeichers, wenn er weder geladen noch entladen werden soll, der Transistor sperrend geschaltet ist und die Diode ebenfalls gesperrt ist und dass zum Laden des Energiespeichers der Transistor leitend geschaltet ist und die Diode undurchlässig ist.

Das Entladen erfolgt also nur über die Diode. Sowie keine Energie mehr aus dem Energiespeicher benötigt wird, wird auch die Diode gesperrt, so dass die niedrige Spannung am teilweise entladenen Kondensator bzw. die Spannung der Batterie das Antriebssystem nicht stören kann. Wenn dann im Bremsbetrieb der Energiespeicher aufgeladen werden soll, wird der Transistor leitend geschaltet. Ein Laden des Energiespeichers über die Diode ist nicht möglich, da sie zum Energiespeicher hin undurchlässig ist.

Mit dem Verfahren wird der Vorteil erzielt, dass mit einfachen Mitteln zum Entladen ein Stromfluss vom Energiespeicher zum Antriebssystem und zum Laden des Energiespeichers ein Stromfluss in umgekehrter Richtung ermöglich ist, während sonst der Energiespeicher vom Antriebssystem abgetrennt ist.

Eine niedrige Spannung am Energiespeicher kann sich daher nicht nachteilig auf das Antriebssystem auswirken. Dieses muss daher nicht überdimensioniert werden. Es ist darüber hinaus keine aufwendige Elektronik notwendig.

Vorteilhafte Weiterbildungen und Ausgestaltungen des Verfahrens sind den Unteransprüchen zu entnehmen.

Beim Entladen ist die Diode durchlässig, da die Spannung am Zwischenkreis um die Diodenspannung kleiner als die Spannung am Energiespeicher ist. Wenn der Energiespeicher bis auf ein Minimum entladen ist und seine Spannung abgefallen ist, wird dann die Diode genauso wie der Transistor gezielt gesperrt.

Zum Sperren der Diode wird beispielsweise gezielt die Spannung am Zwischenkreis vergrößert bis sie größer als die Spannung am Energiespeicher ist und darüber hinaus wird dabei das Antriebssystem mit ausreichender Spannung versorgt . Dazu wird ein bereits vorhandener Spannungsregler in am Zwischenkreis arbeitenden Stromrichtern eingesetzt.

Zum Laden des Energiespeichers wird beispielsweise, bevor der Transistor leitend geschaltet wird, die Spannung am Zwischenkreis gezielt auf das Niveau der Spannung am Energiespeicher geregelt.

Damit wird der Vorteil erzielt, dass es, wenn dann der Transistor leitend geschaltet wird, nicht zu einem Kurzschlussstrom oder zumindest zu einem stark überhöhten Ausgleichstrom kommen kann.

Beim Vergrößern der Spannung am Zwischenkreis kann diese beispielsweise auf einen optimalen Arbeitspunkt eingestellt werden, um die über die am Zwischenkreis angeschlossen Stromrichter betriebenen elektrischen Maschinen mit einem optimalen magnetischen Fluss zu betreiben.

Ein Ausführungsbeispiel für ein Hybridantriebssystem und ein Verfahren zur Regelung eines solchen Hybridantriebssystems nach der Erfindung wird anhand der Zeichnung näher erläutert:
- FIG 1: zeigt das Hybridantriebssystem
- FIG 2: zeigt die Verläufe der Fahrzeuggeschwindigkeit, der Spannung am Zwischenkreis und der Spannung am Kondensator für den Stillstandsbetrieb, den Anfahrbetrieb, den Fahrbetrieb und den Bremsbetrieb.

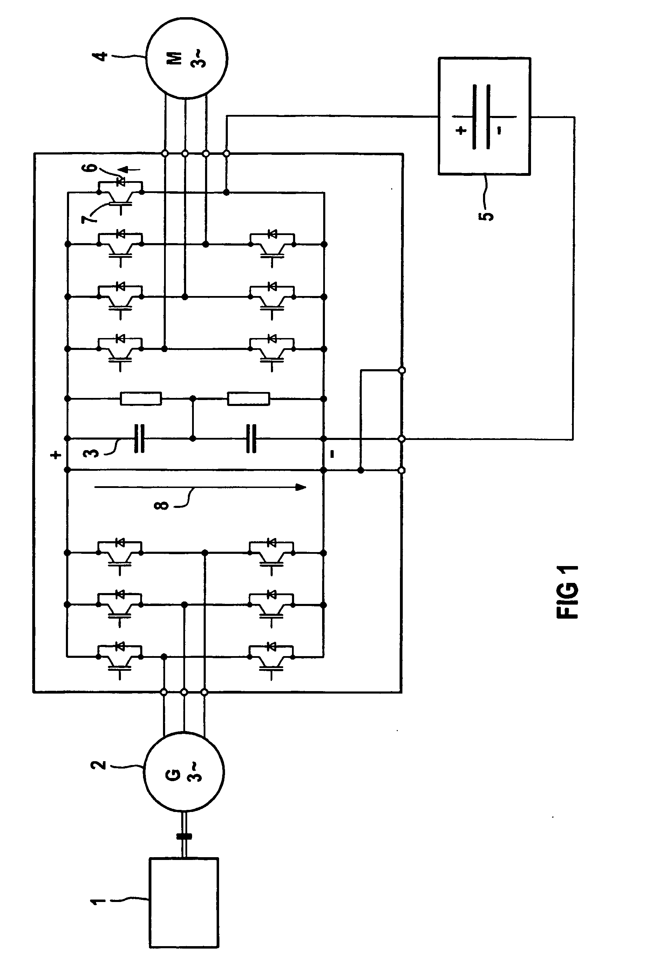

Das Hybridantriebssystem nach Figur 1 besteht aus einem Verbrennungsmotor 1, einem Generator 2, einem Zwischenkreis 3 und einem Elektromotor 4, die hintereinander geschaltet sind. Als Energiespeicher 5 ist ein Ultra-Kondensator vorgesehen, der über einen Schalter mit dem Zwischenkreis 3 verbunden ist. Der Schalter besteht aus einer Diode 6 mit Durchlassrichtung zum Zwischenkreis 3 hin und einen parallel zur Diode 6 angeordneten leitend und sperrend schaltbaren Transistor 7 mit Durchlassrichtung zum Energiespeicher 5 hin. Zur Regelung der Spannung 8 am Zwischenkreis 3 ist ein nicht gezeigter Spannungsregler vorhanden.

Der Transistor 7 ist beim Entladen des Energiespeichers 5 und auch dann, wenn der Energiespeicher 5 vom Antriebssystem getrennt sein soll, sperrend geschaltet. Beim Entladen fließt dann, da die Spannung am Energiespeicher 5 größer als die Spannung 8 am Zwischenkreis 3 ist, ein Strom vom Energiespeicher 5 zum Zwischenkreis 3 und damit zum Elektromotor 4.

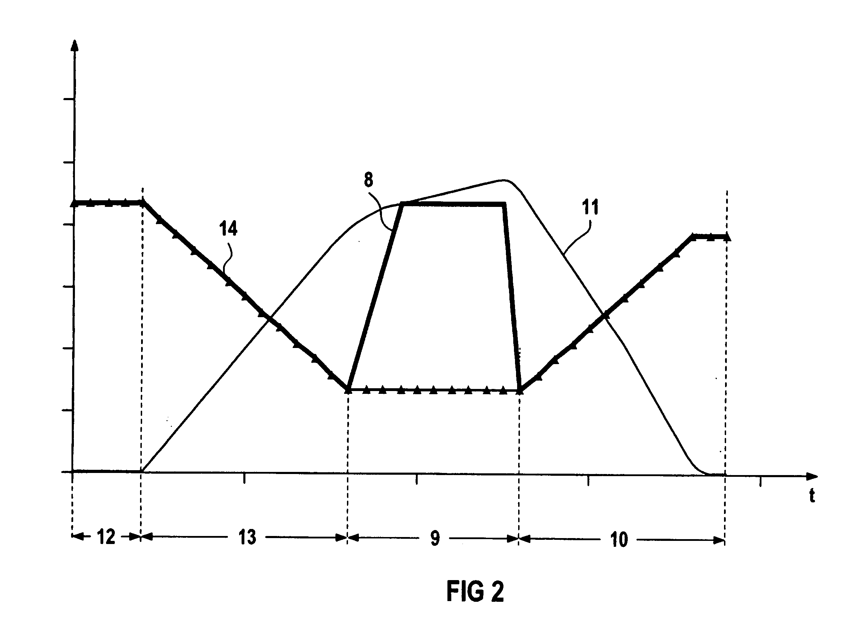

Damit die nach dem teilweisen Entladen niedrige Spannung am Energiespeicher 5 keine negative Auswirkung auf das Antriebssystem hat, wird während des üblichen Fahrbetriebes 9 (Fig. 2) die Diode 6 gesperrt, indem die Spannung 8 am Zwischenkreis 3 mittels des Spannungsreglers vergrößert wird bis sie genau so groß wie oder größer als die Spannung am Energiespeicher 5 ist und den Betrieb der angeschlossenen elektrischen Maschinen, Generator 2 und Elektromotor 4, mit ausreichender Spannung gewährleistet. Die Spannung am Energiespeicher 5 kann sich dann nicht mehr auf die Spannung an anderen Bauteilen des Systems auswirken.

Wenn das Fahrzeug abgebremst wird, soll die dann vorhandene kinetische Energie des Fahrzeugs nach Umwandlung im Generator 2 im Energiespeicher 5 gespeichert werden. Da die Diode 6 vom Zwischenkreis 3 zum Energiespeicher 5 hin immer undurchlässig ist, wird der Transistor 7 leitend geschaltet. Zuvor wird jedoch der Sollwert für die Regelung der Spannung 8 am Zwischenkreis 3 vermindert, so dass sie auf das Niveau der momentanen Spannung am Energiespeicher 5 geregelt wird. Beim anschließenden Leitend-Schalten des Transistors 7 kann es damit nicht zu einem überhöhten Ausgleichstrom oder gar zu einem Kurzschlussstrom kommen.

Das Laden des Energiespeichers 5 kann immer dann initiiert werden, wenn der Fahrzeugführer vom Fahrbetrieb 9 in den Bremsbetrieb 10 (Fig. 2) wechselt.

Figur 2 zeigt schematisch den Verlauf der Geschwindigkeit 11 des Fahrzeuges ausgehend vom Stillstandsbetrieb 12 während des Beschleunigungsbetriebes 13, des Fahrbetriebes 9 und des Bremsbetriebes 10. Die ebenfalls gezeigte Spannung 14 am Energiespeicher 5 nimmt, da dieser entladen wird, während des Beschleunigungsbetriebes 13 ab. Während des Fahrbetriebes 9 bleibt sie auf dem niedrigen Niveau. Während des Bremsbetriebes 10 steigt sie an, da der Energiespeicher 5 geladen wird.

Damit die Diode 6 sperrt, wird am Ende des Beschleunigungsbetriebes 13 die außerdem gezeigte Spannung 8 am Zwischenkreis 3 (Fig. 1), die bisher der Spannung 14 am Energiespeicher 5 entsprach, mit Hilfe des Spannungsreglers so weit erhöht, dass sie größer als die Spannung 14 am Energiespeicher 5 ist. Insbesondere wird die Spannung 8 am Zwischenkreis 3 (Fig. 1) bis zu einem optimalen Arbeitspunkt vergrößert.

Am Beginn des Bremsbetriebes 10 muss der bisher sperrend geschaltete Transistor 7 leitend geschaltet werden, damit ein Stromfluss vom Zwischenkreis 3 zum Energiespeicher 5 möglich wird. Damit es dabei nicht zu einem großen Ausgleichstrom kommt wird vor dem Schalten des Transistors 7 die Spannung 8 am Zwischenkreis 3 (Fig. 1) auf das Niveau der Spannung 14 am Energiespeicher 5 geregelt. Erst unmittelbar danach wird der Transistor 7 leitend geschaltet, so dass der Energiespeicher 5 geladen wird und dadurch die Spannung 14 am Energiespeicher 5 ansteigt.

Es wird insbesondere der Vorteil erzielt, dass sich die im Fahrbetrieb 9 niedrige Spannung 14 am Energiespeicher 5 auf das Antriebssystem nicht auswirken kann, obwohl weder eine aufwendige, schwere Elektronik vorhanden ist, noch das System überdimensioniert sein muss.

## Patentansprüche

1. Verfahren zur Regelung eines Hybridantriebssystems für ein Fahrzeug mit einem Zwischenkreis (3) und einem Energiespeicher (5), wobei der Energiespeicher (5) mit dem Zwischenkreis (3) über einen Schalter verbunden ist, bestehend aus einer Diode (6) mit Durchlassrichtung zum Zwischenkreis (3) hin und einem parallel zur Diode (6)angeordneten, leitend und sperrend schaltbaren Transistor (7) mit Durchlassrichtung zum Energiespeicher (5) hin, wobei zum Entladen des Energiespeichers (5) der Transistor (7) sperrend geschaltet ist und die Diode (6) durchlässig ist und zum Laden des Energiespeichers (5) der Transistor (7) leitend geschaltet ist und die Diode (6) undurchlässig ist und wobei zum Abtrennen des Energiespeichers (5), wenn er weder geladen noch entladen werden soll, der Transistor (7) sperrend geschaltet ist und die Diode (6) ebenfalls gesperrt ist, **dadurch gekennzeichnet, dass** zum Laden des Energiespeichers (5) die Spannung (8) am Zwischenkreis (3) bis auf das Niveau der Spannung (14) am Energiespeicher (5) geregelt wird und dann der Transistor (7) leitend geschaltet wird.

2. Verfahren nach Anspruch 1, **dadurch gekennzeichnet, dass** das Regeln der Spannung (8) am Zwischenkreis (3) bis auf das Niveau der Spannung (14) am Energiespeicher (5) zeitgleich mit dem Übergang vom Fahrbetrieb (9) zum Bremsbetrieb (10) erfolgt.

3. Verfahren nach einem der Ansprüche 1 oder 2, **dadurch gekennzeichnet, dass** die Spannung (8) am Zwischenkreis (3) beim Fahrbetrieb (9) bis zum Arbeitspunkt des Hybridantriebssystems vergrößert wird.

4. Verfahren nach einem der Ansprüche 1 bis 3, **dadurch gekennzeichnet, dass** der Energiespeicher (5) ein Ultra-Kondensator ist.

## Claims

1. Method for controlling a hybrid drive system for a vehicle with an intermediate circuit (3) and an energy store (5), the energy store (5) being connected to the intermediate circuit (3) by means of a switch, comprising a diode (6) with a conducting direction towards the intermediate circuit (3) and a transistor (7) with a conducting direction towards the energy store (5), the said transistor being arranged parallel to the diode (6) and capable of being switched between conducting and blocking, the transistor (7) being switched to blocking and the diode (6) being forward-biased for discharging the energy store (5) and the transistor (7) being switched to conducting and the diode (6) being reverse-biased for charging the energy store (5), and the transistor (7) being switched to blocking and the diode (6) likewise being blocked for disconnecting the energy store (5) if it is to be neither charged nor discharged, **characterized in that**, for charging the energy store (5), the voltage (8) at the intermediate circuit (3) is controlled to the level of the voltage (14) at the energy store (5) and then the transistor (7) is switched to conducting.

2. Method according to Claim 1, **characterized in that** the controlling of the voltage (8) at the intermediate circuit (3) to the level of the voltage (14) at the energy store (5) is performed at the same time as the transition from driving operation (9) to braking operation (10).

3. Method according to either of Claims 1 and 2, **characterized in that** the voltage (8) at the intermediate circuit (3) is increased during driving operation (9) to the operating point of the hybrid drive system.

4. Method according to one of Claims 1 to 3, **characterized in that** the energy store (5) is an ultracapacitor.

## Revendications

1. Procédé de régulation d'un système moteur hybride pour un véhicule ayant un circuit intermédiaire (3) et un accumulateur d'énergie (5), dans lequel l'accumulateur d'énergie (5) est relié au circuit intermédiaire (3) par l'intermédiaire d'un interrupteur constitué d'une diode (6) avec sens passant en direction du circuit intermédiaire (3) et d'un transistor (7) monté en parallèle avec la diode (6), commutable à l'état conducteur et à l'état bloquant et avec sens passant en direction de l'accumulateur d'énergie (5), dans lequel, pour le déchargement de l'accumulateur d'énergie (5), le transistor (7) est commuté à l'état bloquant et la diode (6) est passante et, pour le chargement de l'accumulateur d'énergie (5), le transistor (7) est commuté à l'état conducteur et la diode (6) est bloquante et dans lequel, pour la séparation de l'accumulateur d'énergie (5) lorsqu'il ne doit être ni chargé ni déchargé, le transistor (7) est commuté à l'état bloquant et la diode (6) est également bloquante, **caractérisé par le fait que**, pour le chargement de l'accumulateur d'énergie (5), on règle la tension (8) au circuit intermédiaire (3) jusqu'au niveau de la tension (14) à l'accumulateur d'énergie (5) et on commute ensuite le transistor (7) à l'état conducteur.

2. Procédé selon la revendication 1, **caractérisé par le fait que** le réglage de la tension (8) au circuit intermédiaire (3) jusqu'au niveau de la tension (14) à l'accumulateur d'énergie (5) s'effectue de manière isochrone avec la transition du régime de marche (9) au régime de freinage (10).

3. Procédé selon l'une des revendications 1 ou 2, **caractérisé par le fait que** la tension (8) au circuit intermédiaire (3) lors du régime de marche (9) est augmentée jusqu'au point de fonctionnement du système moteur hybride.

4. Procédé selon l'une des revendications 1 à 3, **caractérisé par le fait que** l'accumulateur d'énergie (5) est un ultracondensateur.
